(19) Europäisches Patentamt
European Patent Office
Office européen des brevets

(11) Veröffentlichungsnummer: **0 387 691 B1**

(12) **EUROPÄISCHE PATENTSCHRIFT**

(45) Veröffentlichungstag der Patentschrift: **28.06.95**

(51) Int. Cl.$^{6}$: **C08F 10/00**, C08F 4/642

(21) Anmeldenummer: **90104402.4**

(22) Anmeldetag: **08.03.90**

Die Akte enthält technische Angaben, die nach dem Eingang der Anmeldung eingereicht wurden und die nicht in dieser Patentschrift enthalten sind.

# (54) Verfahren zur Herstellung eines syndiotaktischen Polyolefins.

(30) Priorität: **11.03.89 DE 3907964**

(43) Veröffentlichungstag der Anmeldung:
**19.09.90 Patentblatt 90/38**

(45) Bekanntmachung des Hinweises auf die Patenterteilung:
**28.06.95 Patentblatt 95/26**

(84) Benannte Vertragsstaaten:
**BE DE ES FR GB IT NL**

(56) Entgegenhaltungen:
**EP-A- 0 351 392**

**J. AM. CHEM. SOC., Band 110, 1988, Seiten 6255-6256, American Chemical Society;J.A. EWEN et al.: "Syndiospecific propylene polymerizations with group 4metallocenes"**

(73) Patentinhaber: **HOECHST AKTIENGESELLSCHAFT**

**D-65926 Frankturt (DE)**

(72) Erfinder: **Winter, Andreas, Dr.**
**Gundelhardtstrasse 2**
**D-6233 Kelkheim/Taunus (DE)**
Erfinder: **Rohrmann, Jürgen, Dr.**
**Die Ritterwiesen 10**
**D-6237 Liederbach (DE)**
Erfinder: **Antberg, Martin, Dr.**
**Sachsenring 10**
**D-6238 Hofheim am Taunus (DE)**
Erfinder: **Dolle, Volker, Dr.**
**Hattersheimer Strasse 15**
**D-6233 Kelkheim/Taunus (DE)**
Erfinder: **Spaleck, Walter, Dr.**
**Sulzbacher Strasse 63**
**D-6237 Liederbach (DE)**

**EP 0 387 691 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung bezieht sich auf ein neues, großtechnisch einsetzbares Verfahren zur Herstellung eines syndiotaktischen Polyolefins.

Syndiotaktische Polyolefine, insbesondere syndiotaktisches Polypropylen, sind an sich bekannt. Es war bisher jedoch noch nicht möglich, derartige Polymeren bei technisch interessanten Polymerisationsbedingungen in ausreichender Ausbeute herzustellen. So ist bekannt, syndiotaktisches Polypropylen durch Polymerisation von Propylen bei - 78 °C in Gegenwart eines Katalysatorsystems bestehend aus $VCl_4$, Anisol, Heptan und Diisobutylaluminiumchlorid herzustellen (vgl. B. Lotz et al., Macromolecules 21, (1988), 2375). Der syndiotaktische Index (= 76,9 %) und die Ausbeute (= 0,16 %) sind jedoch zu niedrig.
Weiterhin ist bekannt, daß mit Hilfe eines Katalysators bestehend aus Isopropylen(cyclopentadienyl)(1-fluorenyl)-zirkondichlorid oder Isopropylen(cyclopentadienyl)(1-fluorenyl)-hafniumdichlorid und einem Methylaluminoxan bei einer Temperatur von 25 bis 70 °C ein syndiotaktisches Polypropylen mit enger Molmassenverteilung in deutlich verbesserter Ausbeute erhalten werden kann (vgl. J.A. Ewen et al., J. Am. Chem. Soc., 110 (1988), 6255). Die gleicher Katalysatoren sind in EP-A-351 392 beschrieben. Allerdings ist die mittels der Zirkonverbindung erzielbare Molmasse des Polymeren noch zu niedrig. Darüber hinaus sind die erzielbaren Syndiotaxien noch verbesserungsbedürftig.
Zwar sind die engen Molmassenverteilungen für den Spritzguß und den Präzisionsspritzguß geeignet, für das Tiefziehen, Extrudieren, Hohlkörperblasformen, Plattengießen und das Herstellen von Folien wäre jedoch eine mittlere bis breite Molmassenverteilung vorteilhaft.

Es ist bekannt, daß die Polymerisation von Ethylen in Gegenwart von gleichzeitig zwei oder mehr Metallocenkatalysatoren Polyethylen mit breiter Molmassenverteilung liefern kann (vgl. EP 128 045). Wegen der Verwendung mehrerer Katalysatorsysteme hat das Polymer jedoch eine schlechte Homogenität. Darüber hinaus liefern die beschriebenen Katalysatoren bei der Polymerisation von 1-Olefinen nur ataktisches Polymer, welches industriell von nur untergeordnetem Interesse ist.

Es bestand die Aufgabe, ein Verfahren zu finden, welches ein hoch syndiotaktisches Polyolefin mit sehr hoher Molmasse und breiter Molmassenverteilung liefert.
Es wurde gefunden, daß die Aufgabe gelöst werden kann, wenn ein spezieller Hafnocenkatalysator eingesetzt wird.

Die Erfindung betrifft somit ein Verfahren zur Herstellung eines syndiotaktischen Polyolefins mit eine Syndiotaxie über 90 % durch Polymerisation oder Copolymerisation eines Olefins der Formel $R^aCH=CHR^b$, worin $R^a$ und $R^b$ gleich oder verschieden sind und ein Wasserstoffatom oder einen Alkylrest mit 1 bis 28 C-Atomen bedeuten, oder $R^a$ und $R^b$ auch cyclisch verbunden sein können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

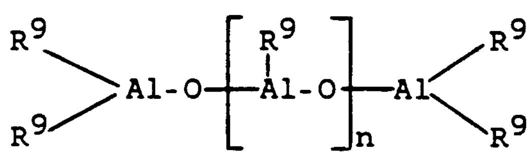

(II)

für den linearen Typ und/oder der Formel III

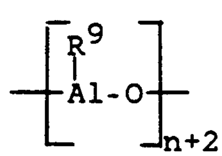

(III)

für den cyclischen Typ besteht, wobei in den Formeln II und III $R^9$ eine $C_1$-$C_6$-Alkylgruppe oder eine $C_6$-$C_{10}$-Arylgruppe oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I

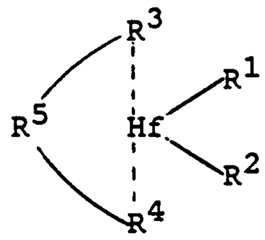

(I)

ist, worin

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ verschieden sind und einen ein- oder mehrkernigen Kohlenwasserstoffrest, welcher mit dem Hafnium eine Sandwichstruktur bilden kann, bedeuten,

$R^5$

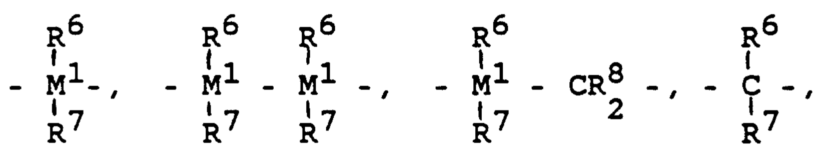

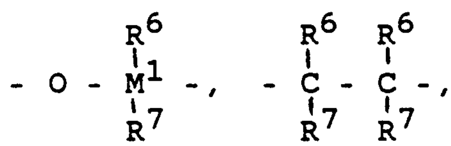

= $BR^6$, = $AlR^6$, -Ge-, -Sn-, -O-, -S-, = SO, = $SO_2$, = $NR^6$, = CO, = $PR^6$ oder = $P(O)R^6$ ist, wobei $R^6$, eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^1$ Silizium, Germanium oder Zinn ist.

Der für das erfindungsgemäße Verfahren zu verwendende Katalysator besteht aus einem Aluminoxan und einem Metallocen der Formel I

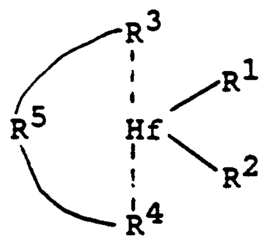

(I)

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind verschieden und bedeuten einen ein- oder mehrkernigen Kohlenwasserstoffrest, welcher mit dem Hafnium eine Sandwichstruktur bilden kann.
Bevorzugt sind $R^3$ und $R^4$ Fluorenyl und Cyclopentadienyl, wobei die Fluorenyl- oder Cyclopentadienyl-Grundkörper noch zusätzlich Substituenten tragen können.

$R^5$ ist eine ein- oder mehrgliedrige Brücke, welche die Reste $R^3$ und $R^4$ verknüpft und bedeutet

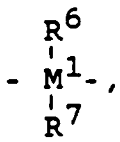 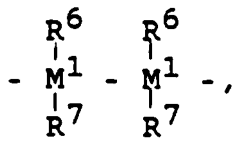 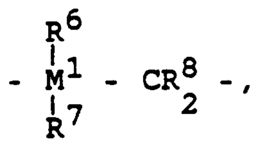 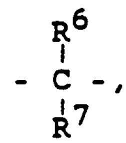

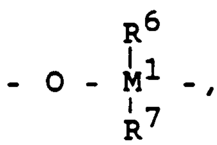 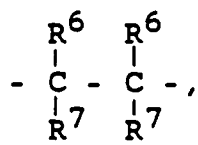

$= BR^6$, $= AlR^6$, -Ge-, -Sn-, -O-, -S-, $= SO$, $= SO_2$, $= NR^6$, $= CO$, $= PR^6$ oder $= P(O)R^6$, wobei $R^6$, eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist, $R^7$ und $R^8$ gleich oder verschieden sind und ein Wasserstoffatom, ein Halogenatom, vorzugsweise Chlor, eine $C_1$-$C_{10}$-, vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^6$ und $R^7$ oder $R^6$ und $R^8$ bilden jeweils zusammen mit den sie verbindenden Atomen einen Ring.

$M^1$ ist Silizium, Germanium oder Zinn, bevorzugt Silizium oder Germanium.

$R^5$ ist vorzugsweise $=CR^6R^7$, $=SiR^6R^7$, $=GeR^6R^7$, -O-, -S-, $=SO$, $=PR^6$ oder $=P(O)R^6$.

Die vorstehend beschriebenen Metallocene können nach folgendem allgemeinen Reaktionsschema hergestellt werden:

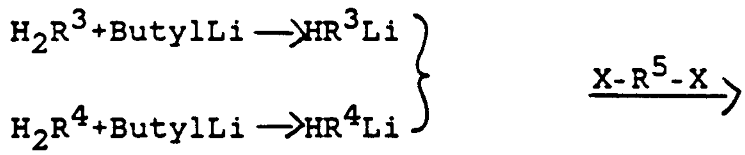

$HR^3-R^5-R^4H$ 2 ButylLi →

$LiR^3-R^5-R^4Li$ Hf $Cl_4$ →

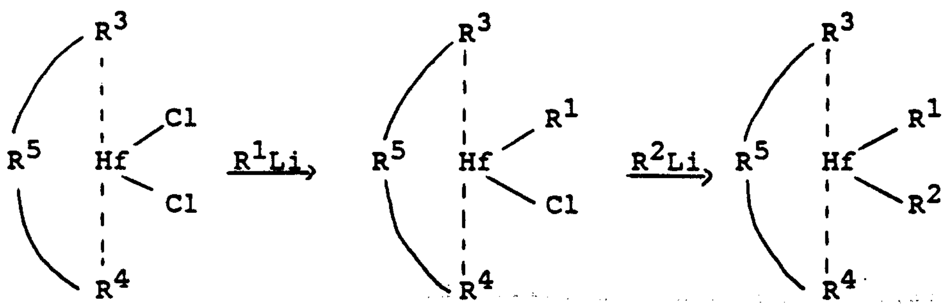


(X = Cl, Br, J, O-Tosyl)

oder

$H_2R^3$+ButylLi → $HR^3Li$

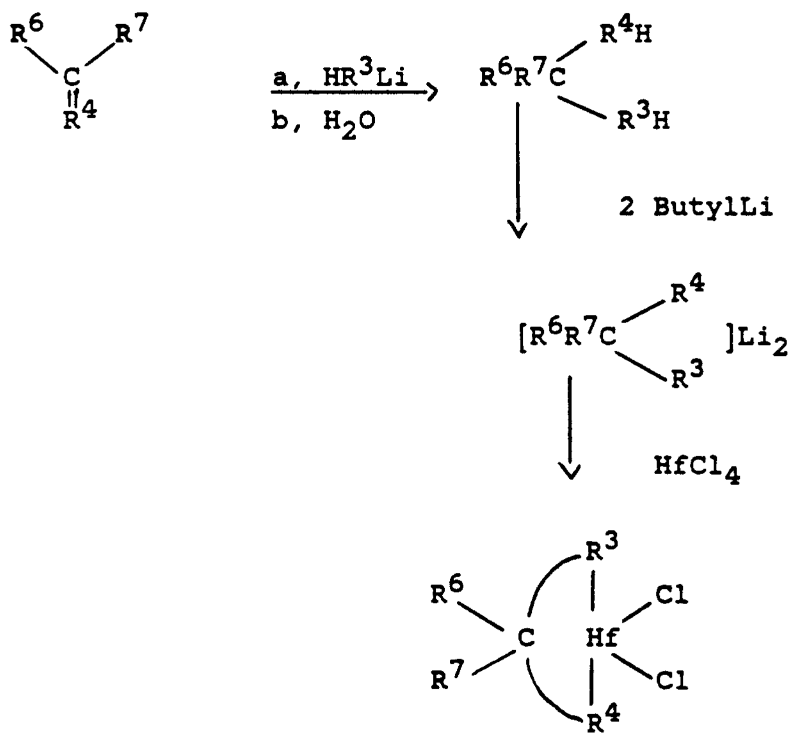

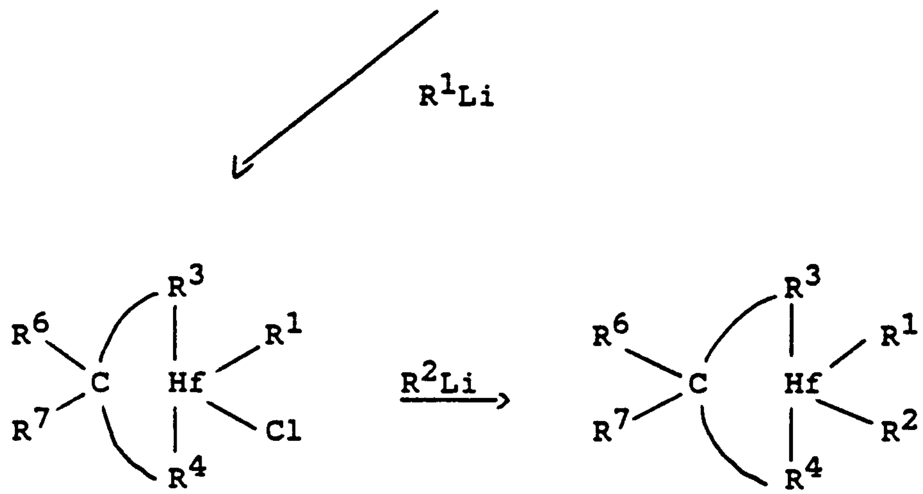


Besonders bevorzugt sind dabei (Methyl(phenyl)methylen)(fluorenyl)(cyclopentadienyl)-hafniumdichlorid sowie (Diphenylmethylen)(fluorenyl)(cyclopentadienyl)-hafniumdichlorid.

Der Cokatalysator ist ein Aluminoxan der Formel II

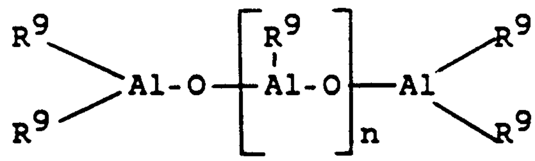

(II)

für den linearen Typ und/oder der Formel III

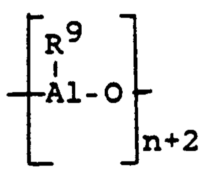

(III)

für den cyclischen Typ. In diesen Formeln bedeuten $R^9$ eine $C_1$-$C_6$-Alkylgruppe, vorzugsweise Methyl, Ethyl oder Isobutyl, Butyl oder Neopentyl, oder eine $C_6$-$C_{10}$-Arylgruppe, vorzugsweise Phenyl, oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 bis 100 °C, vorzugsweise 0 bis 70 °C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -60 bis 200 °C, vorzugsweise -30 bis 100 °C, insbesondere 0 bis 80 °C, durchgeführt.

Der Gesamtdruck im Polymerisationssystem beträgt 0,5 bis 100 bar. Bevorzugt ist die Polymerisation in dem technisch besonders interessanten Druckbereich von 5 bis 60 bar. Monomere, deren Siedepunkt höher ist als die Polymerisationstemperatur, werden bevorzugt drucklos polymerisiert.

Dabei wird die Metallocenverbindung üblicherweise in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-5}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Polymerisiert oder copolymerisiert werden Olefine der Formel $R^aCH = CHR^b$, worin $R^a$ und $R^b$ gleich oder verschieden sind, und ein Wasserstoffatom oder einen Alkylrest mit 1 bis 28 C-Atomen bedeuten, wobei $R^a$ und $R^b$ auch cyclisch verbunden sein können. Beispiele für solche Olefine sind Ethylen, Propylen, 1-Buten, 1-Hexen, 4-Methyl-1-penten, 1-Octen, Norbornen oder Norbornadien. Bevorzugt sind Propylen, 1-Buten und 4-Methyl-1-penten.

Die Molmasse des Polymerisats kann in bekannter Weise geregelt werden. Beispielsweise kann die Molmasse mit überschüssigem, in der Aluminoxanlösung vorhandenen Trialkylaluminium, bevorzugt Trimethylaluminium, geregelt werden. Vorzugsweise wird Wasserstoff verwendet.

Die Dauer der Polymerisation ist beliebig, da das erfindungsgemäß zu verwendende Katalysatorsystem einen nur geringen zeitabhängigen Abfall der Polymerisationsaktivität zeigt.

Bei längerer Polymerisationszeit steigt der hochmolekulare Anteil im Polymeren deutlich an. Zur Erzielung hoher mittlerer Molmassen empfiehlt sich daher eine längere Verweilzeit im Polymerisationssystem.

Um hohe Molmassen zu erreichen, ist es von Vorteil, eine hohe Polymerisationstemperatur einzuhalten, da im erfindungsgemäß zu verwendenden Polymerisationssystem im Gegensatz zu bekannten Verfahren bei zunehmender Polymerisationstemperatur gleichzeitig auch eine höhere Molmasse gefunden wurde. Weiterhin wird bei höherer Polymerisationstemperatur gleichzeitig auch eine höhere Metallocenaktivität erzielt. Dadurch werden niedrigere Restaschegehalte im Polymeren erhalten.

Die Molmassenverteilung ist bei höherer Polymerisationstemperatur breit bis bimodal, bei niedrigerer Temperatur ist sie eng und monomodal.

Darüberhinaus weisen die erfindungsgemäß hergestellten Polymeren generell eine sehr hohe Syndiotaxie von über 90 % auf; darin übertrifft das erfindungsgemäße Verfahren die bekannten Verfahren deutlich.

Die nachfolgenden Beispiele sollen die Erfindung erläutern. Es bedeuten

VZ = Viskositätszahl in $cm^3/g$

$M_w$ = Molmassengewichtsmittel in g/mol

$M_n$ = Molmassenzahlenmittel in g/mol

$M_w/M_n$ = Molmassenverteilung

Die Molmasse wurde durch Gelpermationschromatographie bestimmt.

SI = Syndiotaktischer Index, bestimmt durch $^{13}C$-NMR-Spektroskopie

$n_{syn}$ = mittlere syndiotaktische Blocklänge

$$(1+\frac{2rr}{mr})$$

Alle nachfolgenden Arbeitsoperationen der Metallocensynthese wurden unter Schutzgasatmosphäre unter Verwendung absolutierter Lösemittel durchgeführt.

**Beispiel 1**

(Phenyl(methyl)methylen)(9-fluorenyl)(cyclopentadienyl)-hafniumdichlorid

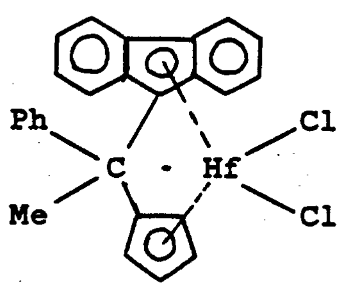

Eine Lösung von 11,4 g (67,8 mmol) 6-Methyl-6-phenylfulven in 40 $cm^3$ THF wurde bei Raumtemperatur mit einer Lösung von 67,8 mmol Lithiumfluoren in 50 $cm^3$ THF versetzt. Nach 2 Stunden Rühren bei Raumtemperatur wurden 60 $cm^3$ Wasser zugesetzt. Die dabei ausgefallene Substanz wurde abgesaugt, mit Diethylether gewaschen und im Ölpumpenvakuum getrocknet. Man erhielt 19,1 g (84,2 %) 1-Cyclopentadienyl-1-(9-fluorenyl)-ethylbenzol (korrekte Elementaranalysen; 1 H-NMR-Spektrum).

10,0 g (19,9 mmol) der Verbindung wurden in 60 $cm^3$ THF gelöst und bei 0 °C mit 26 $cm^3$ (65 mmol) einer 2,5 molaren Hexan-Lösung von n-Butyllithium versetzt. Nach 15 min Rühren wurde das Lösemittel im Vakuum abgezogen. Der verbleibende dunkelrote Rückstand wurde mehrmals mit Hexan gewaschen und im Ölpumpenvakuum getrocknet. Es wurden 15,6 g des roten Dilithiosalzes als THF-Addukt erhalten, das ca 30 % THF enthielt. Eine Suspension von 4,78 g (14,9 mmol) $HfCl_4$ in 70 $cm^3$ $CH_2CH_2$ wurde mit 14,9 mmol Dilithiosalz umgesetzt und aufgearbeitet. Die Kristallisation bei -35 °C ergab 2,6 g(30 %) der Hafnocendichlorid-Verbindung als orange Kristalle.
Korrekte Elementaranalyse.
1 H-NMR-Spektrum (100 MHz, $CDCl_3$): 7,17 - 8,20 (m, 11 H, Flu-H,Ph-H), 6,87 (m, 1, Ph-H), 6,12 - 6,42 (m,3, Ph-H,CpH), 5,82, 5,67 (2×dd,2×1,Cp-H), 2,52 (s,3,$CH_3$).

**Beispiel 2**

Diphenylmethylen(9-fluorenyl)(cyclopentadienyl)-hafniumdichlorid

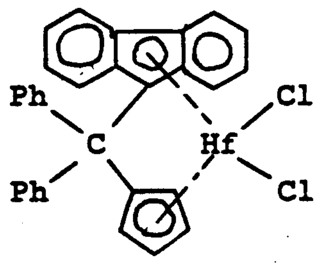

Eine Lösung von 5,10 g (30,7 mmol) Fluoren in 60 $cm^3$ THF wurde bei Raumtemperatur mit 12,3 $cm^3$ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Die dunkelrote Lösung wurde mit 60 $cm^3$ Wasser versetzt, wobei sich die Lösung gelb färbte, und ausgeethert. Die über $MgSO_4$ getrocknete Etherphase wurde eingeengt und bei -35 °C der Kristallisation überlassen. Man erhielt 5,1 g (42 %) 1,1-Cyclopentadienyl-(9-fluorenyl)-diphenylmethan als beiges Pulver. 1,25 g (3,15 mmol) 1,1-Cyclopentadienyl-(9-fluorenyl)-diphenylmethan wurden analog Beispiel 1 mit 6,3 mmol Butyllithium umgesetzt. Das Dilithiosalz wurde analog Beispiel 1 mit 1,0 g (3,15 mmol) $HfCl_4$ umgesetzt. Die Filtration des orangen Reaktionsansatzes über eine G4-Fritte und die Extraktion mit 100 $cm^3$ Toluol ergab 0,70 g (34 %) des Hafnocendichlorid-Komplexes als gelboranges Pulver. Korrekte Elementaranalyse. Das Massenspektrum zeigte $M^+$ = 644.
1 H-NMR-Spektrum (100 MHz,$CDCl_3$): 6,85 - 8,25 (m,16,Flu-H,Ph-H), 6,37 (m,2,Ph-H), 6,31 (t,2,Cp-H), 5,75 (t,2,Cp-M).

**Beispiel 3**

Ein trockener 16 $dm^3$-Reaktor wurde mit Stickstoff gespült und mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad des Methylaluminoxans n = 20) zugegeben und der Ansatz 15 min gerührt.

Parallel dazu wurden 53,0 mg (0,082 mmol) Diphenylmethylen(fluorenyl)(cyclopentadienyl)-hafniumdichlorid in 15 $cm^3$ toluolischer Methylaluminoxanlösung (20 mmol Al) gelöst. Nach 15 min wurde die Lösung in den Reaktor gegeben und die Polymerisationstemperatur auf 60 °C eingestellt. Polymerisiert wurde 5 Stunden. Es wurden 3,20 kg Polypropylen, entsprechend einer Metallocenaktivität von 12,0 kg PP/g Metallocen × h, erhalten.
VZ = 1254 $cm^3/g$; $M_w$ = $2{,}34 \cdot 10^6$, $M_n$ = 580 000, $M_w/M_n$ = 4,0, bimodale Molmassenverteilung; SI = 96,9 %, $n_{syn}$ = 39, 4; MFI 230/5 ≦ 0,1 dg/min.

**Beispiel 4**

Es wurde analog zu Beispiel 3 verfahren, eingesetzt wurden jedoch 64,4 mg (0,10 mmol) Diphenylmethylen(fluorenyl)(cyclopentadienyl)-hafniumdichlorid, die Polymerisationstemperatur betrug 50 °C und die Polymerisationszeit 1 Stunde. 0,34 kg Polypropylen, entsprechend einer Metallocenaktivität von 5,3 kg PP/g Metallocen × h, wurden erhalten.
VZ = 978 $cm^3/g$; $M_w$ = $2{,}01 \cdot 10^6$, $M_n$ = $0{,}61 \cdot 10^6$, $M_w/M_n$ = 3,3, bimodale Molmassenverteilung; SI = 97,0 %, $n_{syn}$ = 40,0 ; MFI 230/5 ≦ 0,1 dg/min.

**Beispiel 5**

Verfahren wurde analog zu Beispiel 3, eingesetzt wurde jedoch 126,4 mg (0,196 mmol) Diphenylmethylen(fluorenyl)(cyclopentadienyl)-hafniumdichlorid, die Polymerisationstemperatur betrug 30 °C und die Polymerisationszeit 2 h. Es wurden 0,35 kg Polypropylen, entsprechend einer Metallocenaktivität von 1,4 kg PP/g Metallocen × h, erhalten.
VZ = 487 $cm^3$/g; $M_w$ = 672 500, $M_n$ = 196 500, $M_w/M_n$ = 3,4, monomodale Molmassenverteilung; SI = 97,5 %, $n_{syn}$ = 48,0 ; MFI 230/5 = 0,1 dg/min.

Die Beispiele 3 bis 5 zeigen, daß zur Erzielung einer hohen Molmasse eine hohe Polymerisationstemperatur angewendet werden muß. Gleichzeitig ist bei höherer Polymerisationstemperatur die Polymerisationsaktivität des Metallocenkatalysatorsystems vorteilhaft höher.

**Beispiel 6**

Es wurde analog zu Beispiel 3 verfahren, eingesetzt wurden jedoch 66,6 mg (0,114 mmol) (Phenyl-(methyl)methylen)fluorenyl)(cyclopentadienyl)-hafniumdichlorid.
1,89 kg Polypropylen, entsprechend einer Metallocenaktivität von 5,7 kg PP/g Metallocen × h, wurden erhalten.
VZ = 603 $cm^3$/g; $M_w$ = 806 000, $M_n$ = 175 000, $M_w/M_n$ = 4,6, die Molmassenverteilung war bimodal; SI = 96,4 %, $n_{syn}$ = 38,0; MFI 230/5 $\leqq$ 0,1 dg/min.

**Beispiel 7**

Es wurde analog zu Beispiel 3 verfahren, eingesetzt wurden jedoch 63,9 mg (0,11 mmol) (Phenyl-(methyl)methylen)(fluorenyl)(cyclopentadienyl)-hafniumdichlorid,die Polymerisationstemperatur betrug 50 °C und die Polymerisationszeit 1 h.
Es wurden 0,17 kg Polypropylen, entsprechend einer Metallocenaktivität von 2,7 kg PP/g Metallocen × h erhalten.
VZ = 380 $cm^3$/g; $M_w$ = 434 000, $M_n$ = 116 000, $M_w/M_n$ = 3,7, die Molmassenverteilung war bimodal; SI = 96,1 %, $n_{syn}$ = 37,0; MFI 230/5 = 0,24 dg/min.

**Beispiel 8**

Es wurde analog zu Beispiel 3 verfahren, eingesetzt wurden jedoch 110,3 mg (0,19 mmol) (Phenyl-(methyl)methylen)(fluorenyl)(cyclopentadienyl)-hafniumdichlorid, die Polymerisationstemperatur betrug 40 °C.
Es wurden 0,65 kg Polypropylen, entsprechend einer Metallocenaktivität von 1,2 kg PP/g Metallocen × h, erhalten.
VZ = 576 $cm^3$/g; $M_w$ = 837 500, $M_n$ = 131 500, $M_w/M_n$ = 6,4; die Molmassenverteilung war bimodal; SI = 97,1 %; $n_{syn}$ = 40,0; MFI 230/5 < 0,1 dg/min.

**Beispiel 9**

Es wurde analog zu Beispiel 3 verfahren, eingesetzt wurden jedoch 151,1 mg (0,26 mmol) (Phenyl-(methyl)methylen)(fluorenyl)(cyclopentadienyl)-hafniumdichlorid, die Polymerisationstemperatur betrug 30 °C. Es wurden 0,35 kg Polypropylen, entsprechend einer Metallocenaktivität von 0,5 kg PP/g Metallocen × h, erhalten. VZ = 251 $cm^3$/g; $M_w$ = 280 500, $M_n$ = 108 500, $M_w/M_n$ = 2,6; die Molmassenverteilung war monomodal; SI = 97,5 %, $n_{syn}$ = 49,4; MFI 230/5 = 1,1 dg/min.

Die Beispiele zeigen, daß zur Erzielung einer möglichst hohen Molmasse eine hohe Polymerisationstemperatur angewendet werden muß. Gleichzeitig ist bei höherer Polymerisationstemperatur die Aktivität des Metallocenkatalysators höher als bei niedrigerer Polymerisationstemperatur. Beispiel 8 zeigt, daß anstelle einer hohen Polymerisationstemperatur auch eine lange Polymerisationszeit zu einer hohen Molmasse führt.

**Beispiel 10**

Ein trockener 16 $dm^3$-Reaktor wurde mit Stickstoff gespült und mit 1,6 $Ndm^3$ (entsprechend 0,1 bar) Wasserstoff sowie mit 10 $dm^3$ flüssigem Propylen befüllt. Dann wurden 30 $cm^3$ toluolische Methylaluminiu-

moxanlösung (entsprechend 40 mmol Al, mittlerer Oligomerisierungsgrad des Methylaluminiumoxans n = 20) zugegeben und der Ansatz 15 min gerührt.

Parallel dazu wurden 55,7 mg (0,087 mmol) Diphenylmethylen(fluorenyl)(cyclopentadienyl)-hafniumdichlorid in 15 $cm^3$ toluolischer Methylaluminoxanlösung (20 mmol Al) gelöst.

Nach 15 min wurde die Lösung in den Reaktor eindosiert und die Polymerisationstemperatur auf 60 °C eingestellt. Polymerisiert wurde 1 h. Es wurden 1,0 kg Polypropylen, entsprechend einer Metallocenaktivität von 18,0 kg PP/g Metallocen x h, erhalten.
VZ = 745 $cm^3$/g; SI = 97,5 %; $M_w$ = 978 000, $M_n$ = 251 500, $M_w/M_n$ = 3,9; MFI 230/5 = < 0,1 dg/min. Laut $^{13}C$-NMR weisen die Polymerketten keine ungesättigten Kettenenden auf.

**Beispiel 11**

Es wurde analog zu Beispiel 10 verfahren, eingesetzt wurden jedoch 48,7 mg (0,084 mmol) (Phenyl-(methyl)methylen)(fluorenyl)(cyclopentadienyl)-hafniumdichlorid.
Es wurden 1,91 kg Polypropylen, entsprechend einer Metallocenaktivität von 7,8 kg PP/g Metallocen x h, erhalten.
VZ = 492 $cm^3$/g; $M_w$ = 697 500; $M_n$ = 131 000; $M_w/M_n$ = 5,3, die Molmassenverteilung war bimodal;
SI = 97,5 %; MFI 230/5 = 0,1 dg/min.
Laut $^{13}C$-NMR wiesen die Polymerketten keine ungesättigten Kettenenden auf.

**Beispiel 12**

Es wurde analog zu Beispiel 10 verfahren, eingesetzt wurden jedoch 40 N $dm^3$ (entsprechend 2,5 bar) Wasserstoff und 60,7 mg (0,104 mmol) (Phenyl(methyl)methylen)-(fluorenyl) (cyclopentadienyl)-hafniumdichlorid.
Es wurden 2,47 kg Polypropylen, entsprechend einer Metallocenaktivität von 8,1 kg PP/g Metallocen x h, erhalten.
VZ = 215 $cm^3$/g; $M_w$ = 218500 $M_n$ = 75500 $M_w/M_n$ = 2,9;
SI = 98,0 %; MFI 230/5 = 8,1 dg/min.
Laut $^{13}C$-NMR wiesen die Polymerketten keine ungesättigten Kettenenden auf.

Die Beispiele 10 bis 12 belegen die Möglichkeit, die Molmasse mittels Wasserstoffzugabe in der Polymerisation zu regeln.

**Patentansprüche**

1. Verfahren zur Herstellung eines sydiotaktischen Polyolefins mit einer Syndiotaxie über 90 % durch Polymerisation oder Copolmerisation eines Olefins der Formel $R^aCH = CHR^b$, worin $R^a$ und $R^b$ gleich oder verschieden sind und ein Wasserstoffatom oder einen Alkylrest mit 1 bis 28 C-Atomen bedeuten, oder $R^a$ und $R^b$ auch cyclisch verbunden sein können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

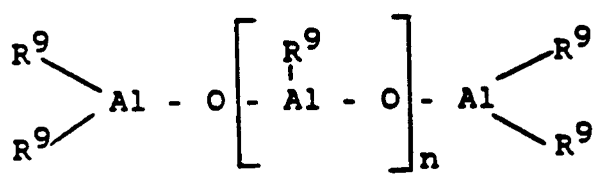

(II)

für den linearen Typ und/oder der Formel (III)

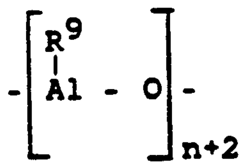

(III)

für den cyclischen Typ besteht, wobei in den Formeln II und III $R^9$ eine $C_1$-$C_6$-Alkylgruppe, eine $C_6$-$C_{10}$-Arylgruppe oder Benzyl bedeutet und n eine ganze Zahl von 2 bis 50 ist, dadurch gekennzeichnet, daß als Metallocen eine Verbindung der Formel I

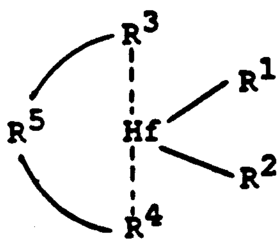

(I)

verwendet wird, worin

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ verschieden sind und einen ein- oder mehrkernigen Kohlenwasserstoffrest, welcher mit dem Hafnium eine Sandwichstruktur bilden kann, bedeuten,

$R^5$

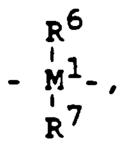 , 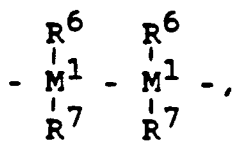 , 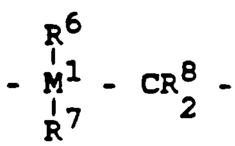 , 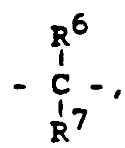 ,

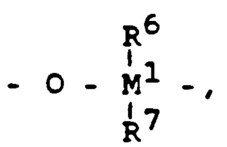 , 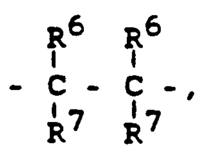 ,

= $BR^6$, = $AlR^6$, -Ge-, -Sn-, -O-, -S-, = SO, = $SO_2$, = $NR^6$, = CO, = $PR^6$ oder = $P(O)R^6$ ist, wobei $R^6$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und $M^1$ Silizium, Germanium oder Zinn ist.

**2.** Verfahren gemäß Anspruch 1, dadurch gekennzeichnet, daß als Metallocen (Methyl(phenyl)methylen) (fluorenyl) (cyclopentadienyl) hafniumdichlorid oder (Diphenylmethylen)(fluorenyl)(cyclopentadienyl)-hafniumdichlorid verwendet wird.

**3.** Verbindung der Formel I

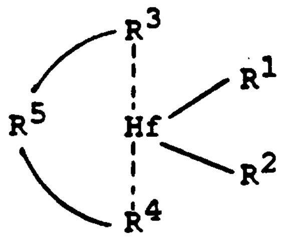

(I)

, worin
$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
$R^3$ und $R^4$ verschieden sind und einen ein- oder mehrkernigen Kohlenwasserstoffrest, welcher mit dem Hafnium eine Sandwichstruktur bilden kann, bedeuten,
$R^5$

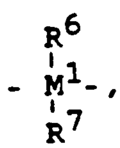, 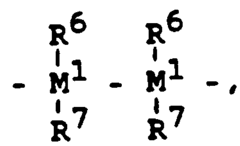, 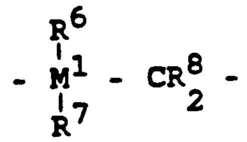, 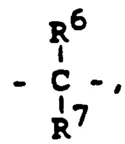,

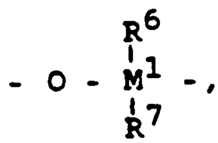, 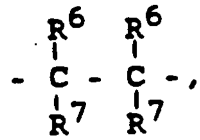,

= $BR^6$, = $AlR^6$, -Ge-, -Sn-, -O-, -S-, = SO, = $SO_2$, = $NR^6$, = CO, = $PR^6$ oder = $P(O)R^6$ ist, wobei $R^6$ eine $C_6$-$C_{10}$-Arylgruppe $C_7$-$C_{40}$-Arylalkylgruppe, eine $C_8$-$C_{40}$-Arylalkenylgruppe oder eine $C_7$-$C_{40}$-Alkylarylgruppe ist, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und $M^1$ Silizium, Germanium oder Zinn ist.

**4.** (Methyl(phenyl)methylen) (fluorenyl) (cyclopentadienyl) hafniumdichlorid.

**5.** (Diphenylmethylen (fluorenyl) (cyclopentadienyl) hafniumdichlorid.

## Claims

**1.** A process for the preparation of a syndiotactic polyolefin having a syndiotactic index of over 90% by polymerization or copolymerization of an olefin of the formula $R^aCH=CHR^b$, in which $R^a$ and $R^b$ are identical or different and denote a hydrogen atom or an alkyl radical having 1 to 28 carbon atoms, or $R^a$ and $R^b$ can also be cyclically joined, at a temperature of -60 to 200 °C under a pressure of 0.5 to 100 bar in solution, in suspension or in the gas phase in the presence of a catalyst which consists of a metallocene as the transition metal component and an aluminoxane of the formula II

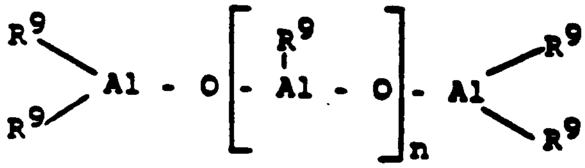

(II)

for the linear type and/or of the formula (III)

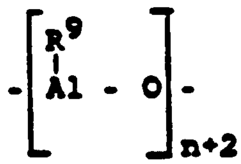

(III)

for the cyclic type, in which, in the formulae II and III, $R^9$ denotes a $C_1$-$C_6$-alkyl group or a $C_6$-$C_{10}$-aryl group or benzyl and n is an integer from 2 to 50, which comprises using as metallocene a compound of the formula I

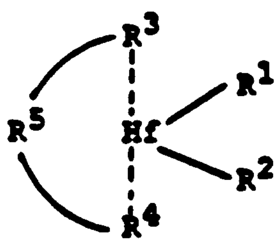

(I)

in which
$R^1$ and $R^2$ are identical or different and denote a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,
$R^3$ and $R^4$ are different and denote a mono- or polynuclear hydrocarbon radical, which can form a sandwich structure with the hafnium,
$R^5$ is

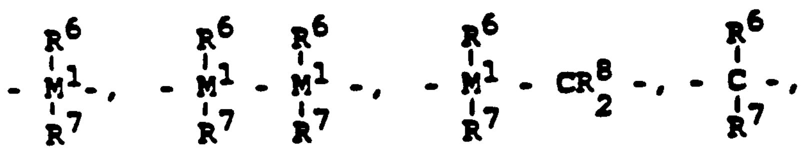

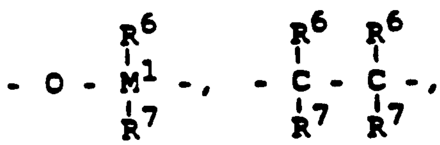

= $BR^6$, = $AlR^6$, -Ge-, -Sn-, -O-, -S-, = SO, = $SO_2$, = $NR^6$, = CO, = $PR^6$ or = $P(O)R^6$, in which $R^6$ is a $C_6$-$C_{10}$-aryl group, a $C_7$-$C_{40}$-arylalkyl group, a $C_8$-$C_{40}$-arylalkenyl group or a $C_7$-$C_{40}$-alkylaryl group, $R^7$ and $R^8$ are identical or different and denote a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^6$ and $R^7$ or $R^6$ and $R^8$, in each case with the atoms joining them, form a ring, and

$M^1$ is silicon, germanium or tin.

2. The process as claimed in claim 1, wherein the metallocene used is (methyl(phenyl)methylene)-(fluorenyl)(cyclopentadienyl)hafnium dichloride or (diphenylmethylene)(fluorenyl)(cyclopentadienyl)-hafnium dichloride.

3. A compound of the formula I

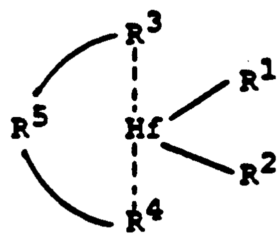

(I)

in which
$R^1$ and $R^2$ are identical or different and denote a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,
$R^3$ and $R^4$ are different and denote a mono- or polynuclear hydrocarbon radical, which can form a sandwich structure with the hafnium,
$R^5$ is

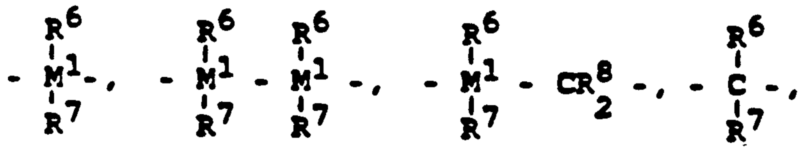

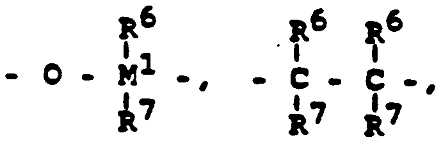

= $BR^6$, = $AlR^6$, -Ge-, -Sn-, -O-, -S-, = SO, = $SO_2$, = $NR^6$, = CO, = $PR^6$ or = $P(O)R^6$, in which $R^6$ is a $C_6$-$C_{10}$-aryl group, a $C_7$-$C_{40}$-arylalkyl group, a $C_8$-$C_{40}$-arylalkenyl group or a $C_7$-$C_{40}$-alkylaryl group, $R^7$ and $R^8$ are identical or different and denote a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^6$ and $R^7$ or $R^6$ and $R^8$, in each case with the atoms joining them, form a ring, and
$M^1$ is silicon, germanium or tin.

4. (Methyl(phenyl)methylene)(fluorenyl)(cyclopentadienyl)hafnium dichloride.

5. (Diphenylmethylene)(fluorenyl)(cyclopentadienyl)hafnium dichloride.

## Revendications

1. Procédé de préparation d'une polyoléfine syndiotactique ayant une syndiotaxie supérieure à 90% par polymérisation ou copolymérisation d'une oléfine de formule $R^aCH = CHR^b$, dans laquelle $R^a$ et $R^b$ sont identiques ou différents et signifient un atome d'hydrogène ou un reste alkyle ayant de 1 à 28 atomes de carbone ou bien $R^a$ et $R^b$ peuvent être liés de manière cyclique, à une température de -60 à 200 °C, sous une pression de 0,5 à 100 bar, en solution, en suspension ou en phase gazeuse, en

présence d'un catalyseur, lequel est formé d'un métallocène comme composant de métal de transition et d'un aluminoxane de formule II

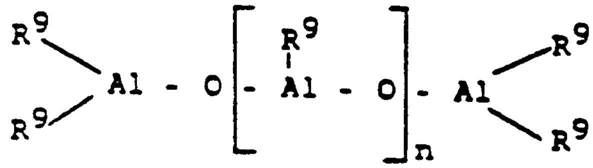

(II)

pour le genre linéaire et/ou de formule (III)

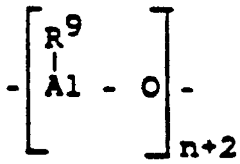

(III)

pour le genre cyclique, $R^9$ dans les formules II et III étant un groupe alkyle en $C_1$-$C_6$, un groupe aryle en $C_6$-$C_{10}$ ou un benzyle et n un nombre entier de 2 à 50, procédé caractérisé en ce que l'on utilise comme métallocène un composé de formule I

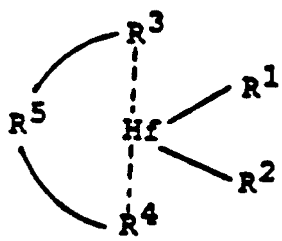

(I)

dans laquelle

- $R^1$ et $R^2$ sont identiques ou différents et signifient un atome d'hydrogène, un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$,
- $R^3$ et $R^4$ sont différents et signifient un radical hydrocarboné monocyclique ou polycyclique pouvant former une structure en sandwich avec l'atome d'hafnium, et
- $R^5$ est

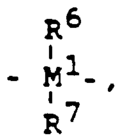, 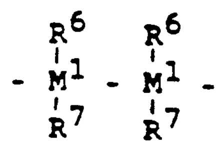, 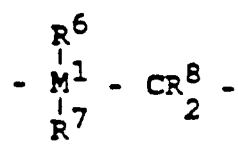, 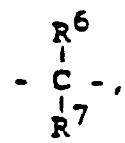,

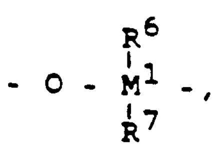, 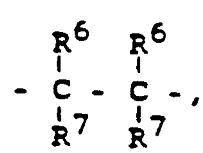,

$=BR^6$, $=AlR^6$, -Ge-, -Sn-, -O-, -S-, $=SO$, $=SO_2$, $=NR^6$, $=CO$, $=PR^6$ ou $=P(O)R^6$, $R^6$

étant un groupe aryle en $C_6$-$C_{10}$, un groupe arylalkyle en $C_7$-$C_{40}$, un groupe arylalcényle en $C_8$-$C_{40}$ ou un groupe alkylaryle en $C_7$-$C_{40}$, $R^7$ et $R^8$ sont identiques ou différents et signifient un atome d'hydrogène, un atome d'halogène, un groupe alkyle en $C_1$-$C_{10}$, un groupe fluoroalkyle en $C_1$-$C_{10}$, un groupe fluoroaryle en $C_6$-$C_{10}$, un groupe aryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$, ou bien $R^6$ et $R^7$ ou $R^6$ et $R^8$, respectivement, forment un cycle avec les atomes qui les relient, et

$M^1$ est le silicium, le germanium ou l'étain.

**2.** Procédé selon la revendication 1, caractérisé en ce que l'on utilise comme métallocène le dichlorure de (méthyl(phényl)méthylène)(fluorényl)(cyclo-pentadiényl)-hafniumou de (diphénylméthylène)(fluorényl)-(cyclopentadiényl)-hafnium.

**3.** Composé de formule I

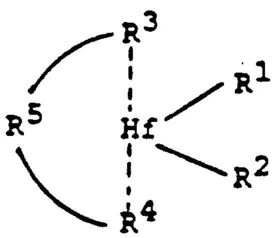

(I)

dans laquelle

$R^1$ et $R^2$ sont identiques ou différents et signifient un atome d'hydrogène, un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$,

$R^3$ et $R^4$ sont différents et signifient un radical hydrocarboné monocyclique ou polycyclique pouvant former une structure en sandwich avec l'atome d'hafnium, et

$R^5$ est

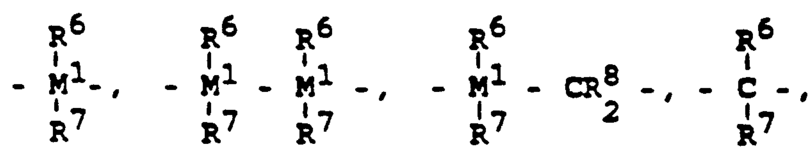

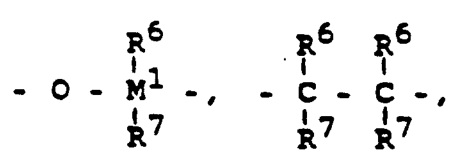

$=BR^6$, $=AlR^6$, -Ge-, -Sn-, -O-, -S-, $=SO$, $=SO_2$, $=NR^6$, $=CO$, $=PR^6$ ou $=P(O)R^6$, $R^6$ étant un groupe aryle en $C_6$-$C_{10}$, un groupe arylalkyle en $C_7$-$C_{40}$, un groupe arylalcényle en $C_8$-$C_{40}$ ou un groupe alkylaryle en $C_7$-$C_{40}$, $R^7$ et $R^8$ sont identiques ou différents et signifient un atome d'hydrogène, un atome d'halogène, un groupe alkyle en $C_1$-$C_{10}$, un groupe fluoroalkyle en $C_1$-$C_{10}$, un groupe fluoroaryle en $C_6$-$C_{10}$, un groupe aryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$, ou bien $R^6$ et $R^7$ ou $R^6$ et $R^8$, respectivement, forment un cycle avec les atomes qui les relient, et

$M^1$ est le silicium, le germanium ou l'étain.

**4.** Dichlorure de (méthyl(phényl)méthylène)(fluorényl)(cyclopentadiényl)-hafnium.

**5.** Dichlorure de (diphénylméthylène)(fluorényl)(cyclopentadiényl)-hafnium.